(19) Europäisches Patentamt

European Patent Office

Office européen des brevets

(11) **EP 1 619 769 A1**

(12) **EUROPEAN PATENT APPLICATION**
published in accordance with Art. 158(3) EPC

(43) Date of publication:
**25.01.2006 Bulletin 2006/04**

(51) Int Cl.:
**H02J 11/00** (1968.09)  **H02J 9/06** (1968.09)

(21) Application number: **04719059.0**

(22) Date of filing: **10.03.2004**

(86) International application number:
**PCT/JP2004/003091**

(87) International publication number:
**WO 2004/082098 (23.09.2004 Gazette 2004/39)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **11.03.2003 JP 2003065330**

(71) Applicants:
- **TMT & D Corporation**
  **Minato-ku,**
  **Tokyo 105-0001 (JP)**
- **KABUSHIKI KAISHA TOSHIBA**
  **Tokyo 105-8001 (JP)**

(72) Inventors:
- **ISEKI, Yasushi,**
  **c/o Intell.Prop.Div. Toshiba Corp**
  **Tokyo 105-8001 (JP)**
- **MORI, Tadashi,**
  **c/o Intell.Prop.Div., Toshiba Corp**
  **Tokyo 105-8001 (JP)**
- **TAKIMOTO, Masaru,**
  **c/o Intell.Prop.Div., Toshiba**
  **Tokyo 105-8001 (JP)**
- **KAWANO, Hiromichi,**
  **c/o Intell.Prop.Div., Toshiba**
  **Tokyo 105-8001 (JP)**

- **NAKAJIMA, Takashi,**
  **c/o Intell.Prop.Div., Toshiba**
  **Tokyo 105-8001 (JP)**
- **OKANO, Tetsuya,**
  **c/o Intell.Prop.Div., Toshiba**
  **Tokyo 105-8001 (JP)**
- **KOBAYASHI, Nobumitsu,**
  **c/o Intell.Prop.Div.,**
  **Tokyo 105 8001 (JP)**
- **MONDEN, Yukitaka,**
  **c/o Intell.Prop.Div. Toshiba**
  **Tokyo 105-8001 (JP)**
- **UMEMURA, Tokihiro,**
  **Intell.Prop.Div., Toshiba Corp.**
  **Tokyo 105-8001 (JP)**
- **NAKAJIMA, Kazuhiro,**
  **c/o Intell.Prop.Div., Toshiba**
  **Tokyo 105-8001 (JP)**
- **TANAKA, Kotaro,**
  **c/o Intell.Prop.Div., Toshiba Corp**
  **Tokyo 105-8001 (JP)**
- **TANAKA, Hideki,**
  **c/o Intell.Prop.Div., Toshiba Cor**
  **Tokyo 105-8001 (JP)**

(74) Representative: **Henkel, Feiler & Hänzel**
**Möhlstrasse 37**
**81675 München (DE)**

(54) **DC POWER SUPPLY SYSTEM AND SWITCH**

(57)     A DC power system comprises a rectifier which converts AC power supplied from an AC power source in a station into DC power to supply the DC power to a DC load, and a storage device normally charged by the DC power output from the rectifier. The storage device is divided into a DC short-time storage device 27 to maintain power supply only for a predetermined short time when power supply from the power source in the station is cut off, and a DC long-time storage device 37 to maintain power supply for a time relatively longer than that of the DC short-time storage device. The DC short-time storage device 27 comprises an electric double-layer capacitor having a predetermined high output density, and the DC long-time storage device comprises a second battery having a predetermined high storage power density.

Printed by Jouve, 75001 PARIS (FR)

**(Cont. next page)**

FIG.1

## Description

Technical Field

The present invention relates to a DC power system and a switch mainly used for a control system at an electric power plant or a substation, or for a control system at substation facilities of a building, an electric railway or the like.

Background Art

For example, to supply power economically and continuously, the substation has a role of not only converting power into voltages suited to power transmission or use to distribute them to a plurality of demand places or households, but also instantaneously cutting off an accident power transmission system at the time of an accident to minimize influences on other systems.

Accordingly, to play such a role, the substation comprises a control system constituted of a switch such as a breaker, a disconnector or an earth device.

As those that comprise the same control system as that of the substation, there are feeding substation facilities and the like of an electric power plant, a switch, a power supply station, a building, an electric railway and the like. Hereinafter, these will be collectively called a power station and substation, and a conventional example will be described.

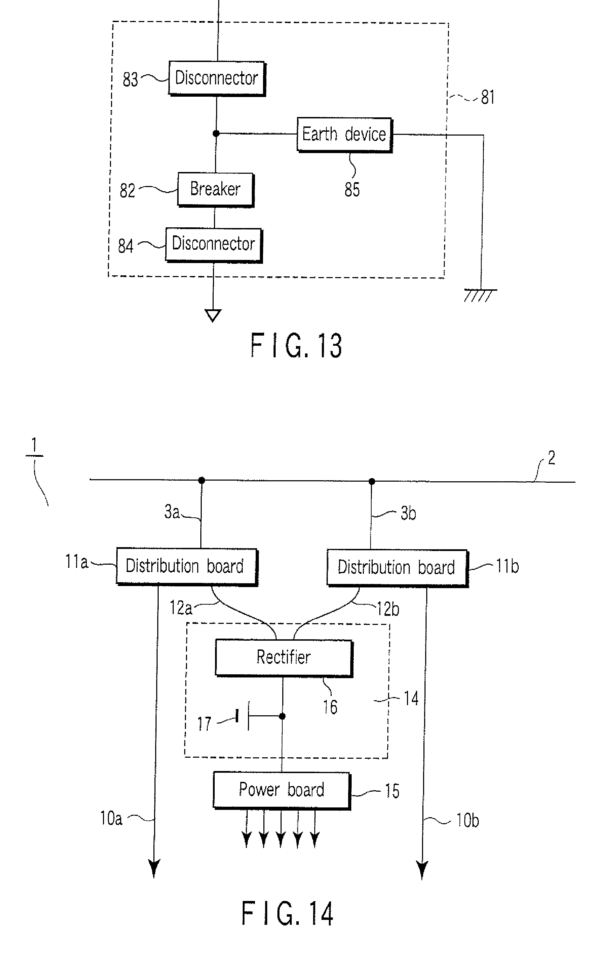

FIG. 14 is a circuitry diagram showing power supply facilities at a conventional power station and substation.

Referring to FIG. 14, high voltage power from a bus line 2 of a power supply system 1 is supplied through power lines 3a, 3b to distribution boards 11a, 11b. The power set to low voltages by the distribution boards 11a, 11b is provided to a power board 15 via a DC power system 14, and the power is supplied to each DC device (not shown) from this power board 15.

In this case, the DC power system 14 is connected to two systems, i.e., the distribution boards 11a, 11b, through the bus line 2. It is for the purpose of supplying power by the other system when one of the two systems cuts off power supply.

The DC power system 14 comprises a rectifier circuit 16, and a DC storage device 17 such as a lead battery. The rectifier 16 converts AC power set to a low voltage into DC power to supply it to the power board 15 and to charge the DC storage device 14. For example, when power supply is cut off at a system of a primary side (bus line side), power is supplied from the DC storage device 17 to each DC device via the power board 15.

It is to be noted that AC power is directly supplied from the distribution boards 11a, 11b through cables 10a, 10b to AC loads in the station.

DC devices to be operated by the DC storage device 17 are a driving mechanism (DC motor, or pull-out or input coil) of a switch installed in a switch installation area, a relay, a state indication light, a control unit, and the like.

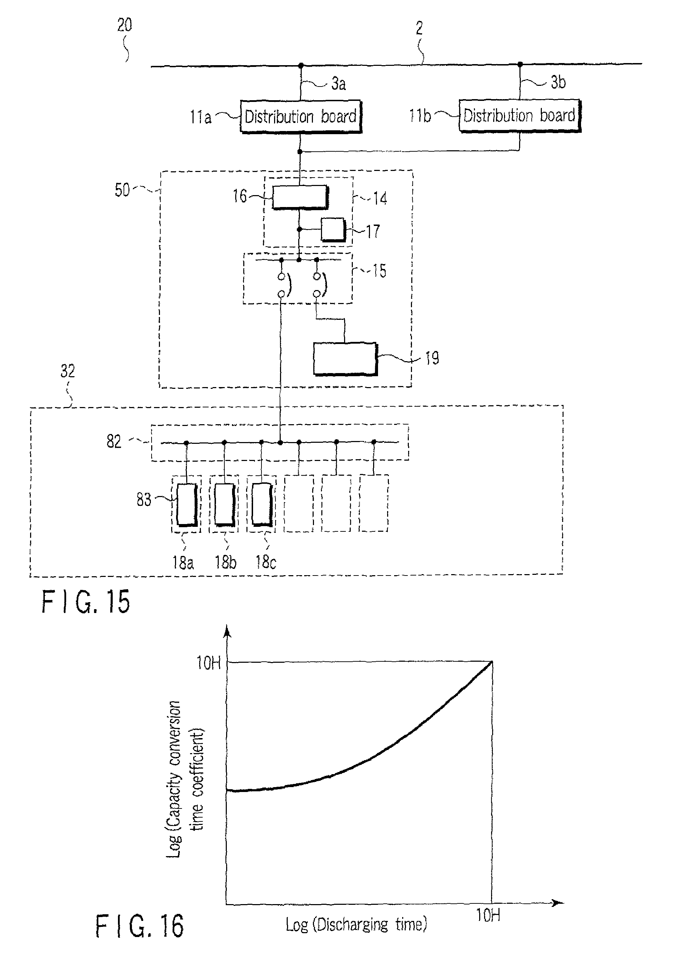

FIG. 15 is a DC power circuitry diagram of a switch control system at the power station and substation. A DC power source of the power board 15 is connected to driving mechanisms or relays of switches 18a, 18b, 18c via a protection control device 19 such as a control board, a protection relay board or a recorder installed in a power station and substation control monitor room 50, a relay and a control unit in a site control board 82 installed in the switch installation area 32, and the site control board 82.

In these devices, an operation of a control mechanism of the switch or the like is involved in instantaneous cutting-off of the system, and the operation is finished within 1 minute. However, a great current is necessary.

The switches 18a, 18b 18c include a breaker, a disconnector, an earth device and the like, and a combination thereof.

For example, in a gas breaker, a control current is about 5 amperes (A) a phase, and time necessary for a switching operation is an order of 100 ms. However, the DC storage device 17 needs a capacity to simultaneously control all the gas breakers. The disconnector and the earth device are controlled in accordance with a sequence. However, a control current of several A must be output for about 10 seconds.

In the case of designing the DC storage device, however, a capacity necessary for the short-time power supply (about 1 minute) and a capacity necessary for the long-time power supply (about 10 minutes) must be combined to evaluate a total capacity. In the case of a lead battery, a necessary capacity is calculated by the following equation:

$$K = (1/L) \times C \times I$$

Here, L is a maintenance factor, C is a capacity conversion time coefficient, and I is a necessary current. The capacity conversion time coefficient varies from one lead battery mode to another. Maintenance time is as shown in a graph of FIG. 16.

As apparent from the drawing, when the maintenance time is long to a certain extent, the maintenance time and the capacity conversion time coefficient approach a proportional relation. At the short time, a value is not reduced in proportion, but an almost fixed value is set. In other words, from the above equation, when power supply time is shortened to about 10 minutes, large storage power is necessary to output a large current of several 100 A. As a result, at the storage device of the power station and substation, a capacity of about 2/3 or more may be set for short-time power supply of the switch or the like.

In consequence, a volume and weight of the storage device are increased, and costs thereof are also increased. Further, there are problems of enlargement of a storage device room, an increase of a work amount during changing, and the like.

Furthermore, the above configuration necessitates an output of a large current of several 100 A from the storage device to an operation mechanism of the switch or the like. Accordingly, a thick and heavy large-capacity cable is used.

Thus, because of wiring of this large-capacity cable, construction costs become high, and a wiring space is necessary.

Recently, for power industry devices, as a large-capacity electric double-layer capacitor (referred to as EDLC battery hereinafter) capable of supplying a large current for a short time, a secondary battery that has characteristics of both a secondary battery such as a lead battery, and an electrolytic capacitor (e.g., Jpn. Pat. Appln. KOKAI Publication No. 2002-34179) has been developed, and commercialized. Different from a conventional secondary battery such as a lead battery, this EDLC battery can output large power, and is suitable as a power source for a device which needs a large current within a short time. In addition, the EDLC battery has excellent characteristics of the secondary battery such as a low environmental load, high-speed chargeability, and a compact form.

Disclosure of Invention

While the DC power system at the power station and substation must output a current of several 100 A for several ten seconds, the conventional storage device that comprises the lead battery needs large storage power to compensate for a small output current density. Thus, there has been a problem of an increase in volume and weight of the storage device.

On the other hand, because of its small storage power density, the EDLC battery needs several 100 cells to connect an output of several 10 minutes, causing increases in size and costs of the device. Additionally, the number of balance circuits installed to prevent an excess voltage applied on the EDLC is increased corresponding to the number of cells, causing increases in costs and failure risks. Thus, advantages of using the EDLC battery are lost.

It is an object of the present invention to provide a DC power system capable of achieving low costs of a storage device in a station, saving space of the storage device, and reducing weight.

A first aspect of the present invention is directed to a DC power system comprising a rectifier which converts AC power supplied from an AC power source in a power station and substation into DC power to supply the DC power to a DC load; and a storage device normally charged by the DC power output from the rectifier, characterized in that the storage device is divided into a DC short-time storage device which maintains power supply only for a predetermined short time when power supply from the power source in the power station and substation is cut off, and a DC long-time storage device which maintains power supply for a time relatively longer than that of the DC short-time storage device; the DC short-time storage device is equipped with a first battery; the DC long-time storage device is equipped with a second battery; the first battery has an output density larger than that of the second battery; and the second battery has an energy density larger than that of the first battery.

A second aspect of the present invention is directed to a switch installed in a switch installation area of a substation, substation facilities or the like, characterized in that a DC short-time storage device equipped with a battery having a predetermined high output density as a DC power source to drive or control an operation device which cuts off or puts in a switch main body is disposed in a housing box selected from an operation box of the switch, a site control board, and a housing box only for the DC short-time storage device.

According to the present invention, it is possible to achieve low costs of the storage device in the electric station such as a power station and substation, to reduce space of the storage device, and to reduce weight.

Brief Description of Drawings

FIG. 1 is a circuitry diagram showing a first embodiment in which a DC power system of the present invention is applied to a power supply system in a power station and substation;

FIG. 2 is a block circuit diagram showing a DC end time storage device according to the embodiment in detail;

FIG. 3 is a circuit diagram showing a configuration example of an EDLC battery according to the embodiment;

FIG. 4 is a circuitry diagram showing a case in which a second embodiment of a DC power system of the present invention is applied to a control system in a power station and substation;

FIG. 5 is a circuit diagram showing a pull-out circuit of an operation device of a breaker to which DC power is supplied from a DC short-time power supply source according to the embodiment in detail;

FIG. 6 is a circuitry diagram showing a case in which a third embodiment of a DC power system of the present invention is applied to a control system in a power station and substation;

FIG. 7 is a circuitry diagram showing a case in which a fourth embodiment of a DC power system of the present invention is applied to a control system in a power station and substation;

FIG. 8 is a configuration diagram showing a first example in which a rectifier and an EDLC battery of a DC short-time power supply source are incorporated in an operation device of a switch in the second to fourth embodiments of the present invention;
FIG. 9 is a configuration diagram showing a second example of the same;
FIG. 10 is a configuration diagram showing a third example of the same;
FIG. 11 is a configuration diagram showing a fourth embodiment of the same;
FIG. 12 is a circuitry diagram showing a case in which a fifth embodiment of a DC power system of the present invention is applied to a control system in a power station and substation;
FIG. 13 is a circuit diagram showing an internal configuration example of a switch according to the embodiment;
FIG. 14 is a circuitry diagram of a power supply system in a power station and substation to which a conventional DC power system is applied;
FIG. 15 is a circuitry diagram of a control system operated by the conventional DC power system; and
FIG. 16 is a curve diagram showing a relation between discharging time and a capacity conversion time coefficient of a lead battery in the conventional DC power system.

Best Mode for Carrying Out the Invention

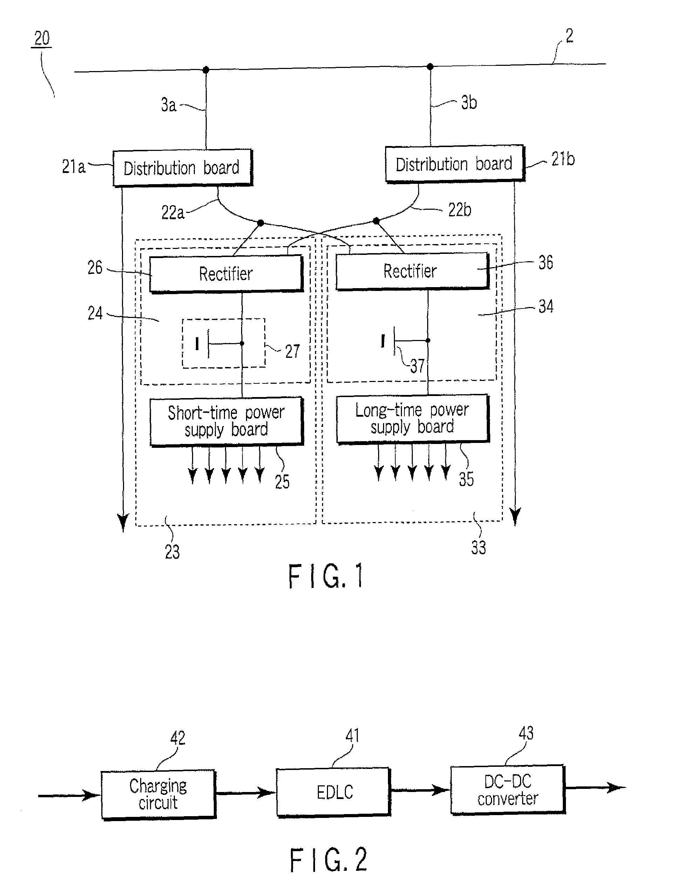

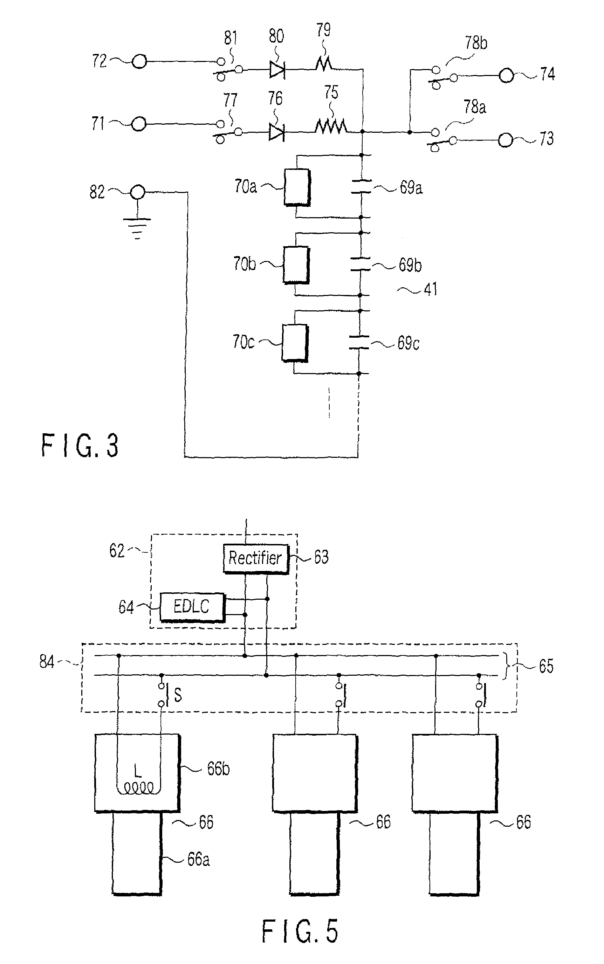

FIG. 1 is a circuitry diagram showing a first embodiment in which a DC power system of the present invention is applied to a power supply system in a power station and substation.
Referring to FIG. 1, high voltage power from a bus line 2 from a power supply system 20 is supplied through power lines 3a, 3b to distribution boards 21a, 21b. Outputs of AC power reduced to low voltages at the distribution boards 21a, 21b are divided into two systems. One thereof is supplied to a DC short-time power supply system 23 which comprises a DC short-time power supply source 24 and a DC short-time power supply board 25, and the other is supplied to a DC long-time power supply system 33 which comprises a DC long-time power supply source 34 and a DC long-time power supply board 35.
The DC short-time power supply source 24 comprises a rectifier 26 for converting AC power of the distribution boards 21a, 21b into DC power, and a DC short-time storage device 27 constituted of a large-capacity electric double-layer capacitor (referred to as "electric double-layer capacitor (EDLC) battery" hereinafter) 41 having a predetermined high output density, a charging device 42, and a DC-DC converter 43 as shown in FIG. 2.
In this case, the EDLC battery 41 has recently been developed as a new battery which has characteristics of both a secondary battery such as a lead battery and an electrolytic capacitor. Different from a conventional secondary battery such as a lead battery, a current can be large, and thus it is suited to a device which needs a large current within a short time. In addition, the EDLC battery has excellent characteristics of the secondary battery such as a low environmental load, high-speed chargeability, and a compact form.
The DC long-time power supply source 34 comprises a rectifier 36 for converting AC power of the distribution boards 21a, 21b into DC power, and a DC long-time storage device 37 constituted of, e.g., a lead battery having a predetermined energy density (storage power density).
As the DC long-time storage device 37, in place of the lead battery, a NAS battery, an alkaline battery, or a nicad battery may be used.
In this case, the EDLC battery has a smaller energy density while its output density is lager than that of the battery used for the DC long-time storage device.
Next, an operation of the DC power system thus configured will be described.
First, in the DC short-time power supply system 23, at the DC short-time power supply source 24, AC power reduced to a low voltage is converted into DC power by the rectifier 26, and output to the DC short-time power supply board 25. The DC power supplied from the rectifier 26 is supplied to the EDLC battery 41 via the charging circuit 42 of the DC short-time storage device 27 shown in FIG. 2, thereby charging the EDLC battery 41 to be always a fixed voltage or more.
Next, in the DC long-time power supply system 33, at the DC long-time power supply source 34, AC power reduced to a low voltage is converted into DC power by the rectifier 36, and output to the DC long-time power supply board 35. The DC power output from the rectifier 36 charges the lead battery of the DC long-time storage device 34 to be always a fixed voltage or more.
In such a state, for example, when the device fails in the power station and substation, or an accident occurs in a power transmission and transformation system, the system must be cut off. At this time, power supply is cut off at the bus line 2 of the power supply system. However, at the DC short-time storage device 27, DC power is supplied from the EDLC battery 41 through the DC-DC converter 43 to the DC short-time power supply board 25 for several minutes. Simultaneously, GCB control is carried out to cut off the system.
Additionally, DC power is supplied from the lead battery of the DC long-time storage device 37 to the DC long-time power supply board 35 for several minutes.
Thus, even when power supply is cut off on the AC power supply side, power can be supplied from the DC short-time storage device 27 to the control mechanism of the switch which needs a large current within a predetermined short time. Power can be supplied from the DC long-time storage device 37 to the operation/display board which needs a small current for a long time, whereby alarm displaying, a power cut-off protection operation or the like can be carried out for a fixed time.
Now, referring to FIG. 3, a configuration example of the EDLC battery 41 added to the DC short-time power supply source 24 will be described.

In FIG. 3, the EDLC battery 41 is configured by serially connecting a plurality of EDLC cells 69a, 69b, 69c, ... (e.g., 50 EDLC cells of a capacity 200 F). Balancer circuits 70a, 70b, 70c, ... to balance voltages are connected in parallel to the EDLC cells 69a, 69b, 69c, ...

An EDLC battery 64 comprises two charging terminals 71, 72 for main charging and high-speed charging on an input side, and two output terminals 73, 74 for control on an output side. One end of a serial circuit constituted of a limit resistor (e.g., 50 Ω) 75, a reverse flow prevention diode 76 and a cut-off switch 77 is connected to the main charging terminal 71, and the other end of the serial circuit is connected through cut-off switches 78a, 78b to the output terminals 73, 74.

One end of a serial circuit constituted of a limit resistor (e.g., 10 Ω) 79, a reverse flow prevention diode 80, and a cut-off switch 81 is connected to another high-speed charging terminal 72. The other end of the serial circuit is connected in common with the other end of the serial circuit of the main charging terminal 71 side, and one end of the serial circuit of the EDLC cells 69a, 69b, 69c, ... is connected to this common contact. In this case, the other end of the serial circuit of the EDLC cells 69a, 69b, 69c, ... is connected to an earth terminal 82.

Now, an operation of the EDLC battery 41 will be described by referring to FIG. 3.

First, in the case of executing initial charging, in the EDLC battery 41, in addition to a DC output device and a control unit, a separately installed high-speed charging DC power source (not shown) is connected to the high-speed charging terminal 72. Here, all the cut-off switches are in unconnected states. In this state, the cut-off switch 81 is turned ON, and the separately installed high-speed charging DC power source is turned ON, whereby the EDLC cell is charged at a high speed.

At a point of time when this EDLC cell is charged almost to a rated voltage, the high-speed charging cut-off switch 81 is turned OFF, and the separately installed high-speed charging DC power source is removed. Then, when a main charging cut-off switch 77 and an output cut-off switch 78a are turned ON, electric charging is carried out by the DC output device 63 thereafter.

In this state, when a control signal is input from the control device to the pull-out circuit of the breaker, the power that has charged the EDLC cell is supplied to the pull-out coil of the operation circuit to cut off the breaker.

In this case, when the EDLC battery 41 is subjected to maintenance, for example, a dummy load of 10 Ω is connected to the output terminal 74. In this state, when the two charging cut-off switches 77, 78a are turned ON, and the cut-off switch 78b is turned ON, a current flows to a connection resistor to discharge the EDLC cell at a high speed.

As described above, according to the present invention, the DC power system is divided into the two systems, i.e., the DC short-time power supply source 24 and the DC long-time power supply source 34, and the DC short-time power supply source 24 comprises the DC short-time storage device 27 equipped with the EDLC battery 41. Thus, different from the conventional secondary battery such as a lead battery, large power can be output for a predetermined short time. As a result, it is possible to reduce stored power in the entire storage device.

Additionally, as compared with the conventional case, costs, a size, and weight can be greatly reduced.

Incidentally, according to estimation by the inventors, when the short-time power supply source is designed to output power at 330 A for 1 minute, and the long-time power supply source is designed to output power at 35 A for 30 minutes, costs can be reduced to 1/7 of those of the conventional case, and a volume ratio and a weight ratio can be respectively reduced to 1/3 and 1/4.

Further, for the charging device, the EDLC battery 41 is used different from the case of the conventional secondary battery. Thus, an environmental load can be reduced, and high-speed charging can be achieved.

Additionally, by dividing the system into the two systems, i.e., the short-time power supply device 24 and the long-time power supply source 34, the following effects can be obtained.

(1) In the power station and substation, a necessary size (capacity) increases with a passage of time in many cases, necessitating an increase in capacity of the DC power source. In many cases, a required capacity is decided by switch control power which needs a large current. However, according to the present invention, as the system is divided into the two systems, i.e., the short-time power supply source 24 and the long-time power supply source 34, the EDLC power system of the short-time power supply source 24 is only necessary in the case of expansion, whereby costs can be reduced.

(2) In the case of controlling the breaker or the like, as a large current is output instantaneously, noise is generated by surging or the like, creating a possibility of adversely affecting other devices such as surrounding electronic devices. Thus, countermeasures such as mounting of many surge suppressing elements have been taken. Because of internal resistance of the secondary battery, for example, when 100 A is output, there is a possibility that a voltage drop of several ten V will occur. Thus, countermeasures such as designing of the device with likelihood have been taken to allow an operation even in the case of a voltage drop. By dividing the system into the two, such countermeasures can be reduced or eliminated.

(3) When the system is divided into the two systems, the short-time power supply source 24 does not need to be installed in the same place as that of the long-time power supply source 34 in a control room or a battery room any more. In other words, the short-time power supply source 24 can be arranged in a position near the switch. As charging of the EDLC battery 41 needs a small current only, when the EDLC battery 41 is arranged in the position near the switch, wiring is set by a thin cable up to the position near the switch. That is, the amount of cable setting can be reduced, and cable arranging work can be simplified. When a battery is arranged in the control room as in the previous case, a length of a cable from the battery to a load (e.g., breaker) becomes several 10 m, increasing electric resistance. Accordingly, the cable may be made thick or the number of cables may be increased to secure a wiring capacity. However, a cable length can be shortened by installing the EDLC battery 41 on the load side, eliminating the necessity of considering a potential drop.

According to the embodiment, the DC-DC converter 43 is used for the DC short-time storage device 27 to compensate for a reduction in output voltage during discharging. However, by selecting a capacity of the EDLC battery 41, the DC-DC converter can be omitted.

According to the embodiment, the AC outputs of the distributors 21a, 21b are supplied through the two systems to the rectifiers 26, 36, and the DC power obtained by converting the AC outputs at the rectifiers is supplied to the DC short-time storage device 27 and the DC long-time storage device 37. However, operation effects similar to those of the embodiment can be obtained by employing a configuration in which the AC outputs of the distributors 21a, 21b are supplied to one rectifier, an output system of the rectifier is divided into two, and one thereof is used to supply DC power to the DC short-time storage device 27 and the other is used to supply DC power to the DC long-time storage device 37.

Furthermore, a wiring method in addition to the above may be used. In any case, however, the system is divided into a system which needs a large current and a system which needs a long-time output, and the EDLC battery is applied to the system which needs the large current, whereby operation effects similar to those of the embodiment can be obtained.

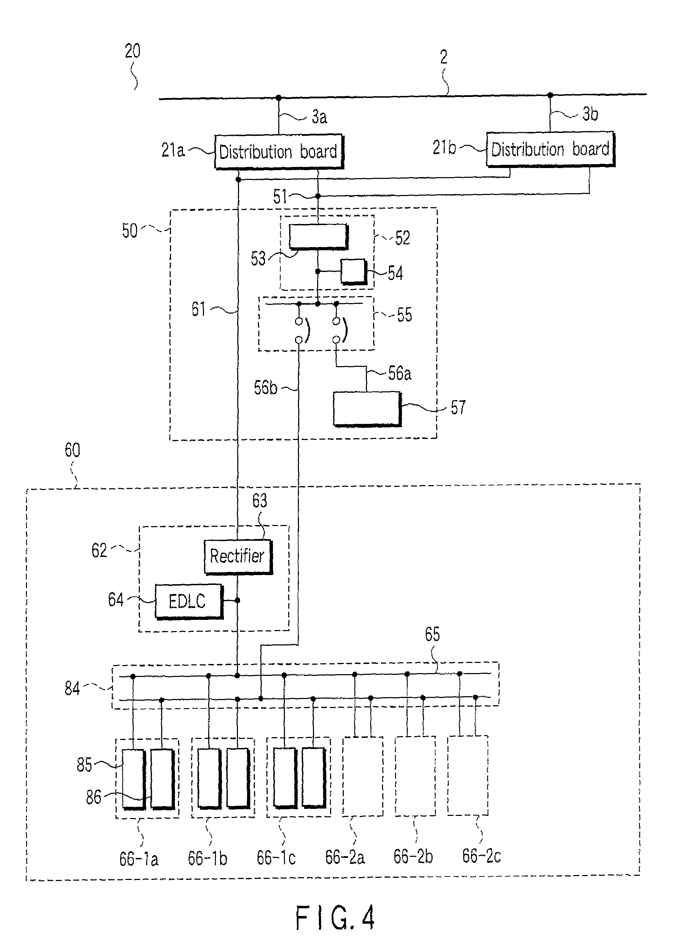

FIG. 4 is a circuitry diagram showing a case in which a second embodiment of a DC power system of the present invention is applied to a control system in a power station and substation.

Referring to FIG. 4, high voltage power from a bus line 2 from a power supply system 20 is supplied through power lines 3a, 3b to distribution boards 21a, 21b. Outputs of AC power reduced to low voltages at the distribution boards 21a, 21b are divided into two systems. One thereof is supplied through a commonly connected wiring 51 to a DC long-time power supply source 52 installed in a power station and substation control monitor room 50, and the other is supplied through a commonly connected wiring 61 to a short-time power supply source 62 installed in a dedicated box of a switch installation area 60.

The DC long-time power supply source 52 comprises a DC output device constituted of a rectifier circuit, and a DC long-time storage device 54 constituted of a lead battery or the like. This long-time power supply source 52 is connected to a DC long-time power supply board 55. A partial wiring 56a pulled out of the DC long-time power supply board 55 is connected to a protection control device 57 such as a control board, a protection relay board, or a recorder installed in the power station and substation control monitor room 50, and power is supplied to each. Another wiring 56b is connected to a small current control circuit 86 such as a display circuit or an interlocking circuit of a switch via a site control board 84 installed in the switch installation area 60, and power is supplied to each.

The DC long-time power supply source 52, the DC long-time supply board 55, and the wirings 56a, 56b constitute a DC long-time power supply system.

On the other hand, the DC short-time power supply source 62 comprises a DC output device 63 and an EDLC battery 64 which are constituted of rectifier circuits. An output of the DC short-time power supply source 62 is connected through the site control board 84 to large current short-time control circuits 85 such as pull-out coil, input coil control circuits or driving DC motor control circuits of breakers 66-1a, 66-1b, 66-1c, 66-2a, 66-2b, 66-2c, ... corresponding to a plurality of three phases.

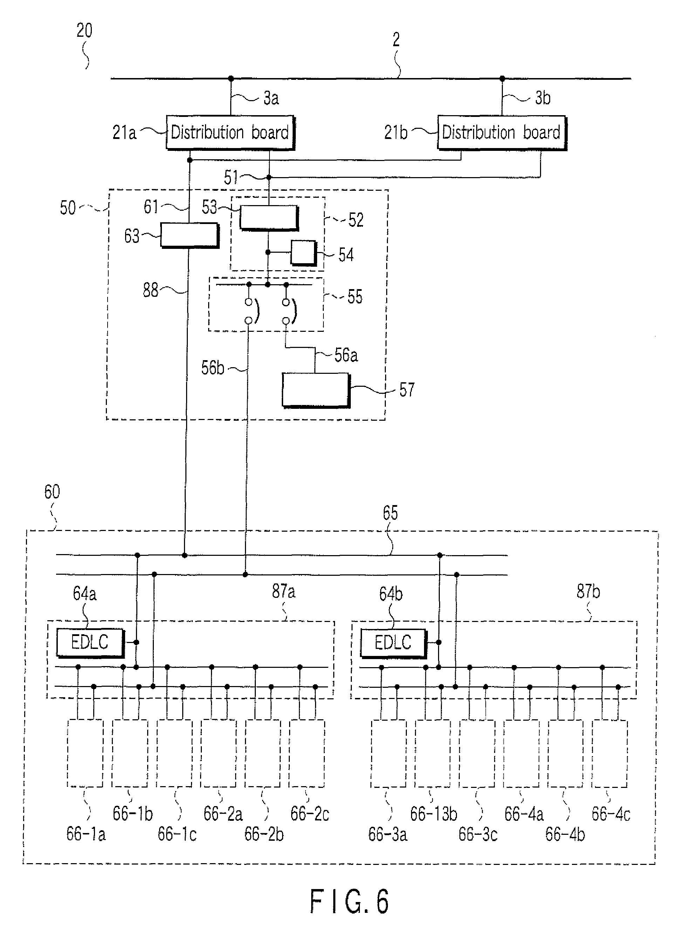

FIG. 5 is a circuit diagram showing a pull-out circuit of an operation device in detail in each breaker 66 to which DC power is supplied from the DC short-time power source 62 through the DC power line 65.

Referring to FIG. 5, 66a is a breaker main body connected to a main circuit (not shown), 66b is an operation box of a breaker equipped with a pull-out coil L connected to the DC power source 65, and 84 is a site control board serially installed in the pull-out coil L and equipped with a contact S closed based on a pull-out command from a control deice of a control room in the station.

The pull-out circuit alone of the operation device has been described. However, the input circuit is similarly configured. The case of supplying the DC power from the DC short-time power supply source 62 to the pull-out circuit 66b of the operation circuit of the breaker 66 has been described. However, in the operation device such as a disconnector or an earth device, a device which needs short-time power supply is connected to the DC power line 65 as in the above case.

Next, an operation of the DC power system thus configured according to the second embodiment will be described.

First, in the DC short-time power supply source 62 of the switch installation area 60, at the DC output device 63, AC power reduced to a low voltage is converted into DC power by the rectifier circuit, and output to the DC power line 65. By the DC power output from the DC output device 63, the EDLC battery 64 is charged to be always a fixed voltage or more. In this case, as a charge current is, e.g., 1A or less per EDLC battery 64, wiring is possible from the DC output device 63 to the EDLC battery 64 by a thin cable.

When power supply is cut off, for example, a current of 5 A is supplied from the EDLC battery 64 to a trip circuit of one breaker 66. Then, these are controlled to cut off the system.

On the other hand, in the DC long-time power supply source 52 of the substation control room 50, at the DC output device 53, AC power reduced to a low voltage is converted into DC power by the rectifier circuit, and output to the DC long-time power supply board 55. DC power is supplied from the DC long-time power supply board 55 to the control device 57 or the like, and simultaneously the DC long-time storage device 54 is charged.

When power supply is cut off, DC power is supplied from the DC long-time storage device 54, and alarm displaying, a power cut-off protection operation or the like is carried out for a fixed time while maintaining an interlocking function.

When a control signal is input from the control device (not show) to the pull-out circuit of the breaker 66 in a charged state of the EDLC battery 64, the power that has charged the EDLC cell through a closed path of a contact S is supplied to a pull-out coil L in the operation box 66b to cut off the breaker.

Thus, by applying the EDLC battery 64 to the DC short-time power supply source arranged in the switch installation area 60, the following effects can be obtained.

By arranging the DC short-time power supply source 62 constituted of the EDLC battery in the switch installation area 60, even when power supply is cut off in the station, power supply can be secured to operate the switch of the substation. Thus, it is possible to greatly shorten recovery time by stabilizing the power system and minimizing an accident range. Besides, different from the conventional secondary battery such as a lead battery, large power can be output for a short time. As a result, it is possible to reduce stored power in the entire storage device. Additionally, as compared with the conventional case, costs, a size, and weight can be greatly reduced.

By using the EDLC battery, an environmental load can be reduced, and high-speed charging can be achieved.

Furthermore, the power supply source for the short time has conventionally been integrated with that for the long time, consequently necessitating a wide site, and it has been arranged in the substation control room (or power source room). In this case, as a large current of 100 to 400 A must be supplied to the switch when power supply is cut off, a thick cable having a corresponding capacity must be laid from the control room to the switch installation area. Thus, a wiring space is necessary, and time and costs are necessary for wiring when a substation is constructed or reconstructed.

On the other hand, according to the embodiment, the cable laid from the distribution board to the DC short-time power supply source is necessary for charging the EDLC battery, and a necessary capacity is only about 10 A. Thus, no special wiring space is necessary, and wiring costs and time can be greatly reduced.

The cable to supply a large current is only from the EDLC battery to the operation device of each switch. Thus, construction costs, an area necessary for wiring, and the like can be greatly reduced.

When a batter is arranged in the control room as in the conventional case, a length of the cable from the battery to a load (e.g., breaker) may become several 10 m, increasing electric resistance, and a necessary cable may become thick. However, by installing the EDLC battery 41 on the load side, the cable length can be shortened, eliminating the necessity of considering a potential drop.

FIG. 6 is a circuitry diagram showing a case in which a third embodiment of a DC power system of the present invention is applied to a control system in a power station and substation. Portions similar to those of FIG. 4 are denoted by similar reference numerals, and description thereof will be omitted. Different portions will be described.

According to the second embodiment, the DC short-time power supply source 62 that comprises the DC output device 63 constituted of the rectifier, and the EDLC battery 64 is arranged in the switch installation area. According to the present embodiment, however, a DC output device 63 is arranged in a control monitor room 50, power converted into DC power is supplied through a cable to a DC power line 65 arranged in a switch installation area, and a plurality of EDLC batteries 64a, 64b, ... connected to the DC power line 65 corresponding to each of switches grouped into a plurality, e.g., breakers 66-1a to 66-1c, 66-2a to 66-2c, 66-3a to 66-3c, 66-4a to 66-4c, ..., are charged. The embodiment shows an example in which the EDLC batteries 64a, 64b are housed in site control boards 87a, 87b.

With this configuration, effects similar to those of the second embodiment can be obtained, and maintenance and changing are facilitated as the DC output device 63 shorter in life than the EDLC battery 64 is installed in the control monitor room.

The switches of the switch installation area are grouped into the plurality, and the EDLC batteries 64a, 64b, ... are arranged corresponding to the groups. Accordingly, the number and a capacity of EDLC batteries 64a, 64b, ..., and how to set writing to the control device can be optimized according to a configuration of the substation. Moreover, as the DC output device 63 installed in the control monitor room is used in common by the EDLC batteries 64a, 64b, ... arranged corresponding to the switch groups, the number of DC output devices 63 can be reduced to simplify the entire device.

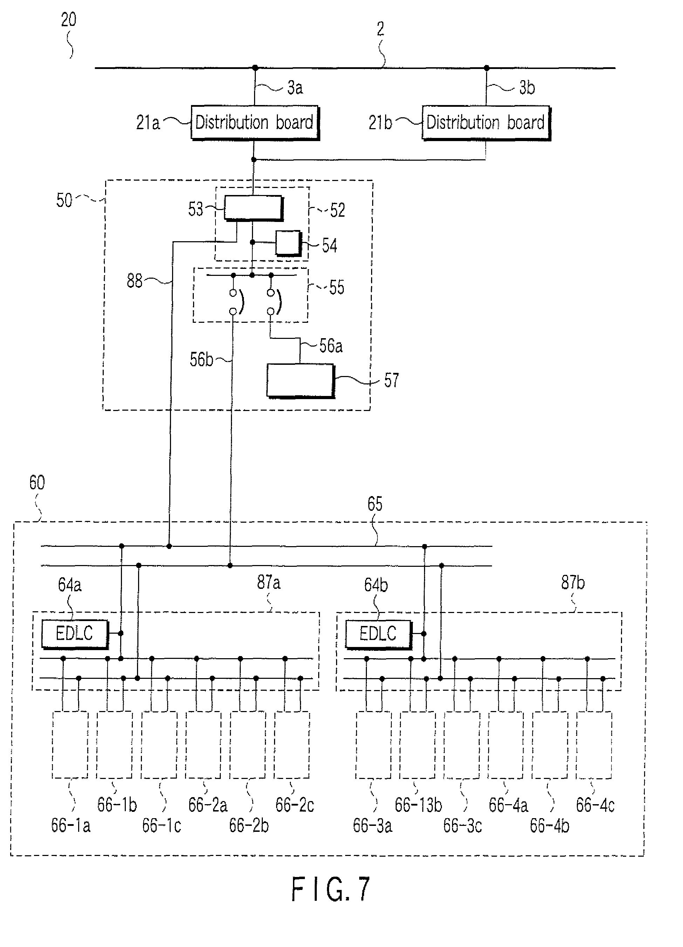

FIG. 7 is a circuitry diagram showing a case in which a fourth embodiment of a DC power system of the present invention is applied to a control system in a power station and substation. Portions similar to those of FIG. 3 are denoted by similar reference numerals, and description thereof will be omitted. Different portions will be described.

According to the embodiment, an output end of a DC output device 53 of a DC long-time power supply source 52 installed in a control monitor room and a DC power line 65 in a switch installation area are connected to each other through a cable 88, and a plurality of EDLC batteries 64a, 64b, ... connected to the DC power line 65 corresponding to each of switches grouped into a plurality, e.g., breakers 66-1a to 66-1c, 66-2a to 66-2c, 66-3a to 66-3c, 66-4a to 66-4c, ..., are charged.

With this configuration, effects similar to those of the second embodiment can be obtained, and the DC output device can be simplified and low costs can be achieved by making the DC output device 53 of the DC long-time system common.

The second to fourth embodiments have been described by way of case in which the DC short-time power supply system 62 or the EDLC battery 64 are installed in the switch installation area separately from the switch. However, the DC output device (rectifier) 63 or the EDLC battery 64 of the DC short-time power supply source 62 for controlling the driving of the operation device of the switch may be disposed in the operation box which houses the operation device of the switch.

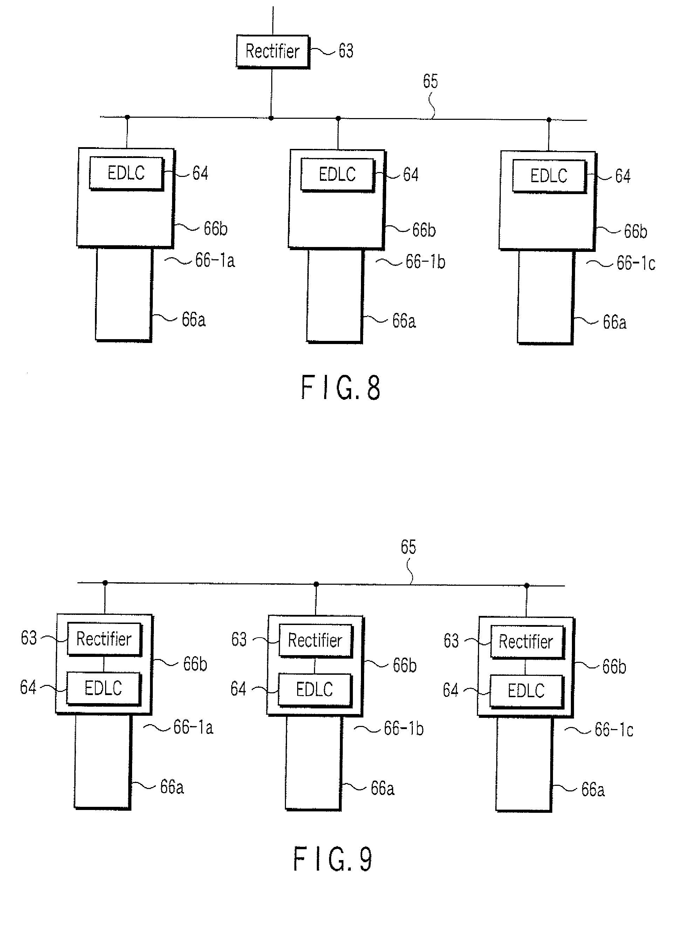

FIG. 8 shows a configuration in which the DC output device 63 is installed, e.g., outside the breaker, and the EDLC battery 64 for controlling the driving of the operation device 66b of each of the breakers 66-1a, 66-1b, and 66-1c corresponding to the three phases is housed in the operation box.

FIG. 9 shows a configuration in which for example, the DC output device 66b constituted of the rectifier and the EDLC battery 64 are housed in the operation box for controlling the driving of the operation device 66b of each of the breakers 66-1a to 66-1c corresponding to the three phases.

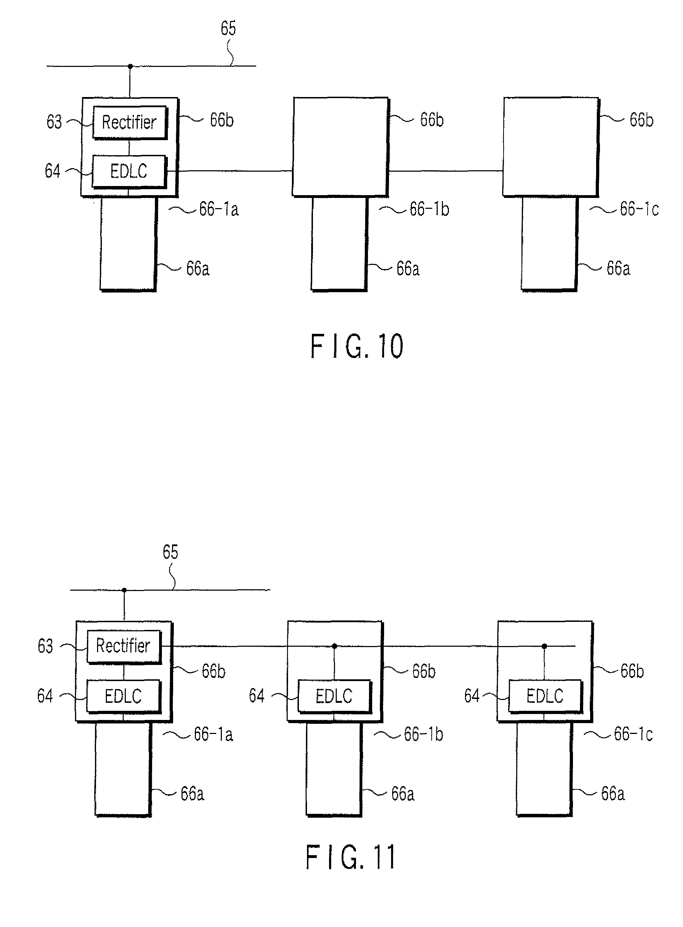

FIG. 10 shows a configuration in which for example, the DC output device 63 and the EDLC battery 64 are housed in the operation box of one of the breakers 66-1a to 66-1c corresponding to the three phases, and a connection is made to enable supplying of DC power from the DC short-time power source to control driving of the operation device 66b of the other breaker.

Furthermore, FIG. 11 shows a configuration in which the DC output device 63 and the EDLC battery 64 are housed in the operation box of one of the breakers 66-1a to 66-1c corresponding to the three phases, the EDLC battery 64 alone is housed in the other operation box, and a connection is made to enable charging of the EDLC battery 64 in the other operation box by a DC current output from the DC output device 63 in one operation box.

With this configuration, by incorporating the EDLC battery 64 in the operation box of the switch, the external wiring of the large-current cable is made unnecessary. Thus, not only the structure can be simplified, but also an accident that accompanies cable wiring can be prevented, and site assembling costs can be reduced.

In the foregoing, the DC output device (rectifier) 63 and the EDLC battery 64 are housed in the operation box of the switch. However, an installing and housing mode thereof is not limited to this. For example, a configuration of housing in a site operation board in place of the operation box of the switch, or a configuration of disposing a dedicated housing box of the DC short-time storage device and housing it therein can be employed. In these cases, effects similar to those of the above can be obtained.

Furthermore, so-called external mounting may be employed in which a mounting mechanism mountable to one of a tank or the operation box of the switch and the site operation board is disposed in the DC short-time storage device and, by this mounting mechanism, the DC output device (rectifier) 63 or the EDLC battery 64 is mounted to an outer periphery of the tank or the operation box of the switch, or the site operation board.

The embodiment has been descried by way of example in which the breaker is used as the switch, and driving or control of the operation device is carried out by the DC short-time power source. However, the embodiment can be applied to a disconnector or an earth device as a switch.

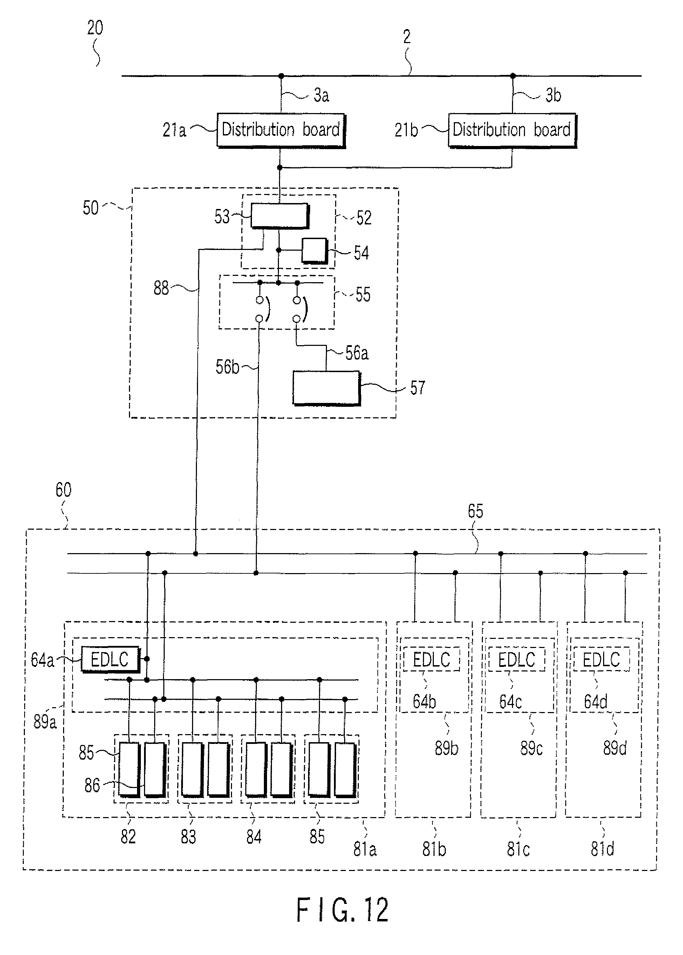

FIG. 12 is a circuitry diagram showing a case in which a fifth embodiment of a DC power system of the present invention is applied to a control system in a power station and substation. Portions similar to those of FIG. 3 are denoted by similar reference numerals, and description thereof will be omitted. Different potions will be described.

The embodiment employs a configuration in which an output end of a DC output device 53 of a DC long-time power supply source 52 installed in a control monitor room and a DC power line 65 in a switch installation area 60 are connected to each other through a cable 88, and EDLC batteries 64a, 64b, 64c, ... incorporated in housing boxes 87a, 87b, 87c, ... of a plurality of switches 81a, 81b, 81c, ... are connected to the DC power line 65.

FIG. 13 is a circuit diagram showing an internal configuration example of the switch 81. This switch 81 comprises a breaker 82 connected to a main circuit of a power system, disconnectors 83, 84 sandwiching the breaker 82 to be connected to both sides thereof, and an earth device 85 connected between a power path for interconnecting the breaker 82 and the disconnector 83 and an earth point. A DC current is supplied from an EDLC battery 64 installed in a housing box such as an operation box of the switch 81, a site control board, or a dedicated box to an operation device of the breaker 82, the disconnectors 83, 84, and the earth device 85 to perform a predetermined sequential operation.

An example of the sequential control operation will be briefly described.

First, a pull-out circuit of the breaker 82 is excited by a DC current supplied from the EDLC battery 64, and the breaker 82 performs a cut-off operation to cut off the power system. Then, after the breaker 82 is completely set in an electric cut-off state by the DC current supplied from the EDLC battery 64, a control operation is set to simultaneously open the disconnectors 83, and 84, and close the earth device 85.

Thus, according to the fifth embodiment, as the EDLC battery 64 is installed in the housing box of the switch 81 to contribute as the driving power source for each switch, effects similar to those of the second embodiment can be obtained, and not only a structure can be simplified because the external wiring of a large-current cable is made unnecessary different from the case in which the EDLC battery 64 is disposed outside the switch 81, but also an accident that accompanies cable wiring can be prevented, and site assembling costs can be reduced.

According to the embodiment, the common from is made with the DC output device 53 of the DC long-time power supply source 52 installed as the DC output device in the control monitor room, and its DC output is supplied through the cable 88 and the DC power line 65 to the EDLC batteries 64a, 64b, 64c, ... incorporated in the housing boxes 89a, 89b, 89c, ... of the switches 81a, 81b, 81c, ... to charge the same. However, the DC output device may be integrated with the EDLC battery to be incorporated in the housing box 89 of each switch 81.

According to the embodiment, one EDLC battery is incorporated in the housing box of one switch, and a DC current is supplied to the operation device of each switch. However, corresponding to each switch in the box of the switching device, the EDLC may be incorporated in a form shown in one of FIGS. 8 to 11.

According to the fifth embodiment, the EDLC battery incorporated in the housing box of the switch becomes a driving power source necessary for opening/closing the switch. Even when the operation device is any one of the pull-out circuit, the input circuit, and the DC motor, a large DC current can be supplied for a short time.

Each embodiment has been described by way of example in which the DC power system of the present invention is applied to the power station and substation. However, when a storage device is installed in an electric station such as substation facilities of a large building or substation facilities of an electric railway, by configuring the same DC power system as that of the above, it is possible to reduce costs and to save space.

Industrial Applicability

According to the present invention, it is possible to obtain a DC power system capable of achieving low costs of a storage device in an electric station such as a power station and substation, saving space of the storage device, and reducing weight, and a switch.

**Claims**

1. A DC power system comprising: a rectifier which converts AC power supplied from an AC power source in a power station and substation into DC power to supply the DC power to a DC load; and a storage device normally charged by the DC power output from the rectifier, **characterized in that** the storage device is divided into a DC short-time storage device which maintains power supply only for a predetermined short time when power supply from the power source in the power station and substation is cut off, and a DC long-time storage device which maintains power supply for a time relatively longer than that of the DC short-time storage device; the DC short-time storage device is equipped with a first battery; the DC long-time storage device is equipped with a second battery; the first battery has an output density larger than that of the second battery; and the second battery has an energy density larger than that of the first battery.

2. The DC power system according to claim 1, **characterized in that** an electric double-layer capacitor is used as the first battery of the DC short-time storage device.

3. The DC power system according to claim 1 or 2, **characterized in that** a plurality of DC short-time storage devices are arranged in a switch installation area of a power station and substation, substation facilities or the like, and used as power sources to drive or control an operation device of a switch installed in the switch installation area.

4. The DC power system according to claim 1 or 2, **characterized in that** the DC short-time storage deice is added to each of a plurality of switches installed in a switch installation area of a power station and substation, substation facilities or the like.

5. The DC power system according to claim 3 or 4, **characterized in that** the plurality of DC short-time storage devices are connected to the same rectifier which converts the AC power into the DC power to charge the first battery.

6. A switch installed in a switch installation area of a substation, substation facilities or the like, **characterized in that** a DC short-time storage device equipped with a battery having a predetermined high output density as a DC power source to drive or control an operation device which cuts off or puts in a switch main body is disposed in a housing box selected from an operation box of the switch, a site control board, and a housing box only for the DC short-time storage device.

7. A switch installed in a switch installation area of a substation, substation facilities or the like, comprising: a DC short-time storage device equipped with a battery having a predetermined high output density as a DC power source to drive or control an operation device which cuts off or puts in a switch main body, **characterized in that** the DC short-time storage device comprises a mechanism to be mounted to an operation box of the switch or a site control board.

8. The switch according to claim 6 or 7, **characterized in that** the battery of the DC short-time storage device comprises an electric double-layer capacitor, and a terminal to charge the battery by an external DC output device.

9. The switch according to claim 6 or 7, **characterized in that** the battery of the DC short-time storage device comprises an electric double-layer capacitor, and a DC output device to charge the battery.

20

2

3a                                                3b

21a — Distribution board              Distribution board — 21b

22a                                                22b

26 — Rectifier                        Rectifier — 36

24                                                34

I — 27                                I — 37

Short-time power
supply board                          Long-time power
                                      supply board

25                                    35

23                                    33

F I G. 1

42                    41                    43

Charging
circuit   →   EDLC   →   DC-DC
                         converter

F I G. 2

FIG. 3

FIG. 5

F I G. 4

F I G. 6

FIG.7

Rectifier ~63

65

EDLC ~64    EDLC ~64    EDLC ~64

~66b    ~66b    ~66b

~66-1a    ~66-1b    ~66-1c

~66a    ~66a    ~66a

## F I G. 8

65

63 ~ Rectifier    63 ~ Rectifier    63 ~ Rectifier

~66b    ~66b    ~66b

64 ~ EDLC    64 ~ EDLC    64 ~ EDLC

~66-1a    ~66-1b    ~66-1c

~66a    ~66a    ~66a

## F I G. 9

65

63 ~ Rectifier ~ 66b
64 ~ EDLC
~ 66-1a
~ 66a

~ 66b
~ 66-1b
~ 66a

~ 66b
~ 66-1c
~ 66a

F I G. 10

65

63 ~ Rectifier ~ 66b
64 ~ EDLC
~ 66-1a
~ 66a

64 ~ EDLC ~ 66b
~ 66-1b
~ 66a

64 ~ EDLC ~ 66b
~ 66-1c
~ 66a

F I G. 11

20

2

3a          3b

21a — | Distribution board |          21b — | Distribution board |

50

53 — | | — 52

54

88

55

56b          56a

57

60

65

64a — | EDLC |          | EDLC | | EDLC | | EDLC |
                          64b      64c      64d

89a

89b      89c      89d

85

86

82    83    84    85    81a    81b    81c    81d

F I G. 12

83 — Disconnector

82 — Breaker

84 — Disconnector

Earth device

85

81

F I G. 13

1

2

3a

3b

11a — Distribution board

Distribution board — 11b

12a

12b

Rectifier

17

16

14

Power board — 15

10a

10b

F I G. 14

20

2

3a

3b

11a — Distribution board

11b — Distribution board

50

16

14

17

15

19

32

82

83

18a 18b 18c

F I G. 15

10H

Log (Capacity conversion time coefficient)

10H

Log (Discharging time)

F I G. 16

## INTERNATIONAL SEARCH REPORT

| International application No. |
| --- |
| PCT/JP2004/003091 |

**A. CLASSIFICATION OF SUBJECT MATTER**
Int.Cl$^7$ H02J11/00, H02J9/06

According to International Patent Classification (IPC) or to both national classification and IPC

**B. FIELDS SEARCHED**

Minimum documentation searched (classification system followed by classification symbols)
Int.Cl$^7$ H02J9/00-11/00, H02B1/24, G21D3/04, H01H33/59

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | Tadashi KAMITA, Hendensho, 3rd eddition, 15 March, 1979 (15.03.79), page 292 | 1-9 |
| Y | JP 9-247856 A (Fuji Heavy Industries Ltd.), 19 September, 1997 (19.09.97), Par. Nos. [0028] to [0034]; Figs. 2, 3 (Family: none) | 1-9 |
| Y | JP 2001-332156 A (Toko Denki Kabushiki Kaisha), 30 November, 2001 (30.11.01), Full text; all drawings (Family: none) | 6-9 |

☒ Further documents are listed in the continuation of Box C.   ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
| --- | --- |
| 03 June, 2004 (03.06.04) | 29 June, 2004 (29.06.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/003091 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-34179 A (Toshiba Corp.), 31 January, 2002 (31.01.02), Full text; all drawings & EP 1172916 A2 & US 2002-17822 A1 | 1-9 |
| Y | JP 2001-176750 A (Matsushita Electric Industrial Co., Ltd.), 29 June, 2001 (29.06.01), Full text; all drawings (Family: none) | 6-9 |
| A | JP 62-49469 B2 (Toshiba Corp.), 20 October, 1987 (20.10.87), Full text; all drawings (Family: none) | 1-9 |
| A | JP 8-182222 A (Hitachi, Ltd.), 12 July, 1996 (12.07.96), Full text; all drawings (Family: none) | 1-9 |
| A | JP 8-79962 A (Taisei Corp.), 22 March, 1996 (22.03.96), Full text; all drawings (Family: none) | 1-9 |
| A | JP 6-289189 A (Toshiba Corp.), 18 October, 1994 (18.10.94), Full text; all drawings (Family: none) | 1-9 |

Form PCT/ISA/210 (continuation of second sheet) (January 2004)

<table>
<tr><td>**INTERNATIONAL SEARCH REPORT**</td><td>International application No.<br>PCT/JP2004/003091</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

A matter common to the invention in claims 1, 2 and the inventions in claims 3-9 is a storage battery provided in a power generating station or a transforming station.

However, our search has found that providing a power-outage-backup storage battery in a power generating station is disclosed in document JP 56-81287 A (Tokyo Shibaura Electric Co., Ltd.) 03. July, 1981 (03.07.81), whole description and claims, whole drawings, and therefore it is not clearly novel.

Consequently the common matter is not a special technical feature within the meaning of PCT Rule 13.2, second sentence, (continued to extra sheet)

1. ☒  As all required additional search fees were timely paid by the applicant, this international search report covers all searchable claims.

2. ☐  As all searchable claims could be searched without effort justifying an additional fee, this Authority did not invite payment of any additional fee.

3. ☐  As only some of the required additional search fees were timely paid by the applicant, this international search report covers only those claims for which fees were paid, specifically claims Nos.:

4. ☐  No required additional search fees were timely paid by the applicant.   Consequently, this international search report is restricted to the invention first mentioned in the claims; it is covered by claims Nos.:

**Remark on Protest**      ☐  The additional search fees were accompanied by the applicant's protest.

☒  No protest accompanied the payment of additional search fees.

Form PCT/ISA/210 (continuation of first sheet (2)) (January 2004)